# EUROPÄISCHE PATENTSCHRIFT

(11) **EP 1 855 344 B1**
(45) Veröffentlichungstag und Bekanntmachung des Hinweises auf die Patenterteilung: **24.08.2011**
(21) Anmeldenummer: 06009742.5
(22) Anmeldetag: 11.05.2006
(51) Int. Cl.: H01M 10/04, H01M 16/00, H01M 10/44, H02J 7/00

(54) **Akkumulatoranordnung**
Assembly of accumulators
Arrangement d'accumulateurs

(43) Veröffentlichungstag der Anmeldung: 14.11.2007
(73) Patentinhaber: HOPPECKE Batterien GmbH & Co. KG, 59929 Brilon (DE)
(72) Erfinder: Markolf, Reiner, 34477 Twistetal (DE); Cattaneo, Eduardo, Dr., 59929 Brilon (DE); Ohms, Detlef, Dr., 37085 Göttingen (DE); Riegel, Bernhard, Dr., 59929 Brilon (DE)
(74) Vertreter: Stenger, Watzke & Ring

(56) Entgegenhaltungen:
- EP-A- 1 126 539
- EP-A- 1 315 227
- DE-U1- 20 013 407
- GB-A- 2 173 056
- US-A- 5 194 799

## Beschreibung

Die vorliegende Erfindung betrifft eine Akkumulatoranordnung mit im Parallelbetrieb betreibbaren Akkumulatoren, wobei wenigstens ein Akkumulator einen großen und ein Akkumulator einen kleinen Innenwiderstand aufweisen, wobei der Akkumulator mit dem großen Innenwiderstand gegenüber dem Akkumulator mit dem kleinen Innenwiderstand einen um einen Faktor von mindestens 3, vorzugsweise von mindestens 5, besonders bevorzugt in einem Bereich von 5 bis 25 größeren Innenwiderstand aufweist. Weiterhin betrifft die Erfindung ein Verfahren zum Betrieb einer Akkumulatorenanordnung, wobei wenigstens ein Akkumulator mit einem großen und ein Akkumulator mit einem kleinen Innenwiderstand parallel betrieben werden, wobei der Akkumulator mit dem großen Innenwiderstand gegenüber dem Akkumulator mit dem kleinen Innenwiderstand einen um einen Faktor von mindestens 3, vorzugsweise von mindestens 5, besonders bevorzugt in einem Bereich von 5 bis 25 größeren Innenwiderstand aufweist.

In vielen technischen Bereichen findet sich die Verwendung von Batterien, insbesondere Akkumulatoren, die vorzugsweise dafür vorgesehen sind, lokale Energieversorgungen für elektrische Verbraucher darzustellen. Darüber hinaus werden Batterien bzw. Akkumulatoren an Stellen eingesetzt, an denen eine öffentliche Energieversorgung nicht mit ausreichender Zuverlässigkeit oder überhaupt nicht verfügbar ist. Gerade bei mobilen Anwendungen findet die Benutzung von Akkumulatoren ein weites Anwendungsfeld, da die Mehrfachnutzung, ermöglicht durch Wiederaufladung, lange Betriebszeiträume auch bei hohem Energieverbrauch erlaubt. Akkumulatoren werden daher unter anderem häufig im Traktionsbetrieb sowie im Bereich unterbrechnungsfreier Energieversorgungen verwendet, beispielsweise bei Gabelstaplern Hubeinrichtungen, Golfcaddies oder dergleichen. Auch im Kraftfahrzeugbereich und im Sicherheitsbereich sind Akkumulatoren weit verbreitet.

Eine sehr häufig verwendete Akkumulatorenart ist der Blei-Säure-Akkumulator, welcher beispielsweise mit Schwefelsäure betrieben wird. Diese Akkumulatorart weist im Vergleich zu anderen Akkumulatorarten eine große Kapazität als Energiespeicher unter Berücksichtigung der Kosten auf. Als nachteilig bei diesen Akkumulatoren erweist es sich jedoch, daß, verursacht durch einen

vergleichsweise vom Ladezustand abhängigen hohen Innenwiderstand, die Kapazität des Akkumulators bei der Versorgung einer an den Akkumulator angeschlossenen elektrischen Anlage nicht vollständig genutzt werden kann, insbesondere wenn hohe Strombelastungen bei Entladezuständen unterhalb von etwa 20% der Nennkapazität auftreten.

In der praktischen Ausgestaltung führt dieser Nachteil dazu, daß bei Verwendung von kostengünstigen Akkumulatoren diese für den bestimmungsgemäßen Betrieb der elektrischen Anlage überdimensioniert werden müssen, damit der bestimmungsgemäße Betrieb der angeschlossenen elektrischen Anlage gewährleistet werden kann, denn dieser erfordert in der Regel eine von einer Lastcharakteristik unabhängige, angemessen konstante Spannung, die sich nur in einem bestimmten, schmalen Spannungsbereich ändern darf.

Bei einer Vielzahl von Anwendungen werden standardgemäß hergestellte Akkumulatoren im Parallel- und/oder Serienbetrieb zu einer Akkumulatorenanordnung zusammengeschaltet, die als solche zur Energieversorgung der elektrischen Anlage vorgesehen ist. Bei solchen Akkumulatoranordnungen können sich die Probleme noch verstärken, da oftmals die einzelnen Akkumulatoren unterschiedliche Kennparameter wie Alterungszustand, Innenwiderstand, Kapazität oder dergleichen aufweisen. Gerade kostengünstige Akkumulatoren zeigen neben einem bereits zu Beginn bestehenden hohen Innenwiderstand einen Anstieg des Innenwiderstands über die Betriebsdauer, der vergleichsweise hoch ist und die Qualitätsmerkmale der Akkumulatoranordnung deutlich negativ beeinflußt. Darüber hinaus streuen ihre Kennwerte oftmals über einen unerwünscht großen Bereich.

Ein Weg, um die Problematik bezüglich des Innenwiderstands zu verbessern, wird im Stand der Technik dadurch aufgezeigt, daß die Akkumulatorspannung beziehungsweise die Klemmenspannung der Akkumulatoranordnung deutlich höher als die zum Betrieb der elektrischen Anlage erforderliche Spannung gewählt wird, wobei mittels eines Längsreglers die Akkumulatorspannung auf das erforderliche Niveau abgesenkt wird. Nachteilig an diesem Weg ist, daß zusätzliche, teilweise teure Elektronik erforderlich ist, und Energie durch die Spannungsumsetzung verloren geht.

Es offenbart die DE 20013 407 U1 eine Vorrichtung zum Parallelbetrieb eines Bleiakkumulators und eines zyklenfesten Akkumulators, wobei zum Laden zwei Schalter mit einer Ansteuerung verwendet werden, die eine bevorzugte Ladung des Bleiakkumulators bewirkt. Darüber hinaus offenbart die US 5,194,799 eine Booster-Batterie, die manuell über Anschlussleitungen an eine Fahrzeugbatterie parallel anklemmbar ist. Die Booster-Batterie dient dazu, eine erschöpfte Fahrzeugbatterie zu puffern, so dass ein Startvorgang einer Verbrennungsmachine des Fahrzeugs eingeleitet werden kann.

Ferner ist aus der GB 2,173,056 A ein Sicherheitslicht für marine Anwendungen bekannt, welches sich beim Eintauchen in Meerwasser automatisch aktiviert. Dazu ist eine Lithiumbatterie als Versorgung für die Lichtquelle vorgesehen, die mittels eines Transistors mit der Lichtquelle verbunden wird. Der Transistor selbst wird an seiner Basis mittels einer Meerwasserbatterie gespeist, bei der das Meerwasser als Elektrolyt verwendet wird. Die Batterien sind nicht aufladbar. Weiterhin offenbart die EP 1126 539 A2 eine elektrochemische Batterie, die ebenfalls nicht aufladbar ist, und die aus zwei unterschiedlichen Batterietypen mit einem gemeinsamen Elektrolyten gebildet ist. Eine der Batterien wird für eine konstante Last mittels geringen Pulsstroms verwendet, wohingegen die zweite Batterie für eine Pulslast mit höheren Pulsströmen ausgelegt ist. Die Batterien sind parallelgeschaltet.

Ferner offenbart die EP 1 315 227 A2 eine aufladbare Energieversorgungseinheit bestehend aus parallelgeschalteten elektrochemischen Zellen. Eine erste Zelle wird zellenweise parallel an einer zweiten Reihe von Zellen geschaltet. Die Besonderheit ist, dass die zweiten Zellen einen Elektrolyt besitzen, in dem Elektrolyse und/oder die Rekombination der regenerierten Gase stattfindet. Die Ladespannung der Energieversorgungseinheit wird an das Elektrolysepotential oder das Rekombinationspotential angepasst. Die erste Zelle ist eine Lithium-Zelle oder ein Doppelschichtkondensator und die zweiten Zellen sind ausschließlich elektrochemische Speicher, bei denen Elektrolyse oder Gasrekombination stattfinden kann.

Unter Berücksichtigung des vorgenannten Stands der Technik ergibt sich die Aufgabe der Erfindung dazu, eine Akkumulatorenanordnung sowie ein Verfahren zu deren Betrieb dahingehend weiterzubilden, dass die Kapazität von kostengünstigen Akkumulatoren mit hohem Innenwiderstand besser genutzt werden kann.

Als **Lösung** wird mit der Erfindung eine Akkumulatorenanordnung nach Anspruch 1 sowie ein Verfahren nach Anspruch 17 vorgeschlagen. Weitere Vorteile und Merkmale ergeben sich aus den abhängigen Ansprüchen.

Erstmals ist es somit möglich, lediglich durch Zusammenschaltung zweier Akkumulatoren die Gesamtausnutzung der Kapazität der Akkumulatoren bzw. der Akkumulatoranordnung erheblich zu verbessern. Deutlich voneinander abweichende Innenwiderstände bedeutet, dass der Akkumulator mit einem großen Innenwiderstand gegenüber dem Akkumulator mit einem kleinen Innenwiderstand einen um einen Faktor von etwa mindestens 3, vorzugsweise von etwa mindestens 5, besonders bevorzugt in einem Bereich von etwa 5 bis 25, größeren Innenwiderstand aufweist. Kostengünstige Blei-Säure-Akkumulatoren weisen bei einer Akkumulatorkapazität von ca. 50 Ah einen Innenwiderstand in einem Bereich von etwa 7 bis 12 mΩ auf, also einen großen Innenwiderstand. Dagegen weisen beispielsweise Akkumulatoren mit basischem Elektrolyten wie Nickel-Cadmium-Akkumulatoren einen Innenwiderstand in einem Bereich von 0,5 mΩ oder kleiner auf, der als kleiner Innenwiderstand angesehen wird. Aber auch der Aufbau des Akkumulators selbst beeinflusst den Innenwiderstand, so dass es grundsätzlich gemäß der Erfindung darauf ankommt, dass ein Akkumulator mit einem großen Innenwiderstand parallel mit einem Akkumulator mit einem geringen Innenwiderstand betrieben werden kann. Zu den kostenintensiven Bleiakkumulatoren mit einem kleinen Innenwiderstand gehören die verschlossenen Glasvlies-Bleiakkumulatoren (VRLA-AGM) mit einem prismatischen oder Wickelzellenaufbau.

Der Innenwiderstand gibt an, wie stark die Akkumulatorspannung unter Belastung, das heißt unter Stromentnahme, abnimmt. Bei hoher Stromentnahme sinkt daher die Klemmspannung des Akkumulators gegenüber der Leerlaufspannung deutlich ab. Da beim Entladen eines Akkumulators, dessen Klemmspannung ohnehin langsam mit zunehmender Entladung abnimmt, erscheint ein Akkumulator mit hohem Innenwiderstand schneller entladen als ein Akkumulator mit geringem Widerstand, selbst wenn deren nominale Kapazitäten gleich sind. Dieses Problem kann nun mit der Erfindung überwunden werden, indem nämlich zu einem bereits vorhandenen Akkumulator mit hohem Innenwiderstand ein Akkumulator mit kleinem Innenwiderstand parallel geschaltet wird. Die Parallelschaltung kann je nach Ausgestaltung direkt erfolgen, oder es können zusätzliche Steuermittel vorgesehen sein, mit denen der Parallelbetrieb steuerbar ist. So kann beispielsweise vorgesehen sein, dass während einer Hochstromentladephase die Energieversorgung vorzugsweise aus dem Akkumulator mit dem kleinen Innenwiderstand erfolgt, wobei in einer Phase niedriger Stromentnahme dieser Akkumulator durch den Akkumulator mit hohem Innenwiderstand sukzessive wieder geladen wird. In Abhängigkeit der Anforderungen der Energieversorgung bezüglich der elektrischen Anlage sind daher die Kapazitäten der beiden Akkumulatoren bzw. der Akkumulatoranordnung auszuwählen.

Vorzugsweise weisen alle Akkumulatoren die gleiche Klemmspannung auf, so dass sie direkt parallel betreibbar sind. Eine hohe Verfügbarkeit der Energieversorgung kann erreicht werden, insbesondere weil durch die erfindungsgemäße Akkumulatoranordnung die gesamte Speicherkapazität besser ausgenutzt werden kann.

Ein Akkumulator mit breiter Anwendung ist der Blei-Säure-Akkumulator. Ein beispielsweise geschlossener Blei-Säure-Akkumulator in konventioneller Bauweise mit nassem Elektrolyten zeichnet sich durch besonders kostengünstige Herstellung aus, wobei zugleich eine hohe Kapazität erreicht werden kann. Preisgünstige Blei-Säure-Akkumulatoren weisen oftmals einen hohen Innenwiderstand auf. Gleichwohl sind auch Blei-Säure-Akkumulatoren mit kleinem Innenwiderstand verfügbar, die jedoch teurer als die Blei-Säure-Akkumulatoren mit hohem Innenwiderstand sind. Durch geeignete Kombination solcher Akkumulatoren kann daher die Verfügbarkeit der Energieversorgung verbessert werden.

Ferner kommt beispielsweise der Einsatz eines Akkumulators mit einem basischen Elektrolyten in Frage. Akkumulatoren mit basischem Elektrolyten weisen oftmals einen kleinen Innenwiderstand auf, sie sind jedoch gegenüber Blei-Säure-Akkumulatoren mit gleicher Kapazität teurer. Mit der vorliegenden Erfindung wird nun vorgeschlagen, dass solche Akkumulatoren mit Blei-Säure-Akkumulatoren mit hohem Innenwiderstand im Parallelbetrieb betrieben werden können. Durch geeignete Auswahl der Klemmenspannung und der Akkumulatorenkapazitäten kann erreicht werden, daß die Verfügbarkeit der Akkumulatoranordnung verbessert werden kann. So kann vorgesehen sein, daß eine Hochstromenergieversorgungsphase durch einen Akkumulator mit basischem Elektrolyten abgefangen wird, wobei dieser in einer Phase mit geringer Stromentnahme durch den Blei-Säure-Akkumulator aufgeladen werden kann. Der basische Elektrolyt kann beispielsweise ein Elektrolyt auf alkalischer Basis sein, wie beispielsweise K-OH.

In einer weiteren Ausgestaltung wird vorgeschlagen, daß der Akkumulator mit kleinem Innenwiderstand ein Akkumulator mit basischem Elektrolyten, insbesondere ein Nickel-Metall-Hydrid- oder Nickel-Cadmium-Akkumulator, ist. Derartige Akkumulatoren sind als Handelsprodukte auf dem Markt erhältlich. Gegenüber Blei-Säure-Akkumulatoren weisen sie einen geringeren Innenwiderstand und eine hohe Zyklenfestigkeit auf. So kann kostengünstig auf zuverlässige, in Serienfertigung hergestellte Akkumulatoren mit geringem Innenwiderstand zurückgegriffen werden. Gerade Nickel-Cadmium-Akkumulatoren zeichnen sich ferner durch eine hohe Zuverlässigkeit und Konstanz ihrer Parameter während des bestimmungsgemäßen Betriebs aus. Ferner sind solche Akkumulatoren hochstromladefähig, wovon ebenfalls die vorliegende Erfindung Gebrauch macht. In einer Ausgestaltung in der beispielsweise ein Blei-Säure-Akkumulator mit hoher Kapazität einem Nickel-Cadmium-Akkumulator mit kleiner Kapazität parallel geschaltet wird, entspricht ein kleiner Entladestrom des Blei-Säure-Akkumulators einem hohen Ladestrom des Nickel-Cadmium-Akkumulators. Hierdurch kann erreicht werden, daß der bezogen auf den Blei-Säure-Akkumulator kleine Entladestrom, der zugleich der Ladestrom des Nickel-Cadmium-Akkumulators ist, in bestimmungsgemäßer Weise den Nickel-Cadmium-Akkumulator aufladen kann. Hierbei erweist es sich ebenfalls als vorteilhaft, daß Nickel-Cadmium-Akkumulatoren auch mit hohen Ladeströmen geladen werden können.

Weiterhin wird vorgeschlagen, daß wenigstens eine Elektrode eines Akkumulators durch eine Faserstrukturelektrode gebildet ist. Die Faserstrukturelektrode kann den inneren Widerstand des Akkumulators senken, insbesondere kann sie den Innenwiderstand des Akkumulators reduzieren, indem der elektrische Widerstand der Elektrode aufgrund des kürzeren Wegs zwischen aktiver Masse und den aus elektrisch leitfähigen, insbesondere vernickelten, Fasern bestehenden Stromableitern reduziert wird. So können nicht nur Energieverluste innerhalb des Akkumulators reduziert werden, sondern es kann auch eine stabilere Spannung an den Klemmen unter Belastung erreicht werden.

In einer weiteren Ausgestaltung wird vorgeschlagen, daß ein Akkumulator ein Lithium-lonen-Akkumulator ist. Der Lithium-lonen-Akkumulator weist in der Regel eine hohe Belastbarkeit bei großem Innenwiderstand auf. Er verfügt darüber hinaus während des bestimmungsgemäßen Betriebs über annähernd konstante Parameter und eine deutlich höhere Energiedichte im Vergleich zu herkömmlichen Akkumulatoren. Um die Vorteile des Lithium-lonen-Akkumulators besser zu nutzen, kann dieser beispielsweise mit einem Nickel-Cadmium-Akkumulator parallel betrieben werden, um den Nachteil des großen Innenwiderstands zu reduzieren.

Weiterhin wird vorgeschlagen, daß eine Zellenanzahl des Akkumulators mit basischem Elektrolyten kleiner oder gleich der doppelten Zellenanzahl des Blei-Säure-Akkumulators ist. Durch geeignete Auswahl der Zellen kann erreicht werden, daß die Akkumulatoren direkt im Parallelbetrieb verschaltet werden können. Schaltmittel zur Separierung einzelner Akkumulatoren sowie Steuermittel können eingespart werden.

In einer weiteren Ausgestaltung wird vorgeschlagen, daß die Kapazität des Akkumulators mit dem kleineren Innenwiderstand etwa 5% bis 70%, vorzugsweise 10% bis 50%, besonders bevorzugt 15% bis 35%, der Kapazität des Akkumulators mit dem großen Innenwiderstand beträgt. Die Kosten für die Akkumulatoranordnung können reduziert werden, insbesondere weil oftmals der Akkumulator mit dem kleinen Innenwiderstand bei vergleichbarer Kapazität teurer ist als ein Akkumulator mit großem Innenwiderstand.

Darüber hinaus wird vorgeschlagen, daß die Akkumulatoranordnung eine Steuereinheit aufweist. Mit der Steuereinheit, beispielsweise in Form einer Energiemanagement- und/oder Betriebsüberwachungseinheit, kann erreicht werden, daß die Akkumulatoranordnung als solche und auch für jeden Akkumulator selbst einen optimalen Betrieb ermöglicht. So kann beispielsweise vorgesehen sein, daß individuell für einzelne Akkumulatoren der Akkumulatoranordnung Lade- und Entladezeiträume vorgegeben werden.

Weiterhin wird vorgeschlagen, daß die Akkumulatoranordnung eine Rechnereinheit aufweist. Die Rechnereinheit kann als Rechen- und Datenspeichereinheit und darüber hinaus mikroprozessorgesteuert ausgebildet sein. Mittels der Rechnereinheit kann erreicht werden, daß bestimmungsgemäße Betriebsabläufe der Akkumulatoranordnung automatisiert werden können. Die Betriebsabläufe können beispielsweise in Form eines Rechnerprogramms basierend auf Algorithmen mit batteriespezifischen Daten in der Rechnereinheit vorgesehen sein. Hierdurch kann eine leichte Anpaßbarkeit an einen gewünschten Betrieb ermöglicht werden, in dem lediglich das Rechnerprogramm entsprechend angepaßt und/oder die entsprechende Ladekennlinie für das Ladegerät eingeladen wird.

Ferner wird vorgeschlagen, daß die Akkumulatoranordnung eine steuerbare Schalteinheit aufweist. Die Schalteinheit kann dazu vorgesehen sein, einzelne Akkumulatoren oder auch die gesamte Akkumulatoranordnung schaltbar mit der angeschlossenen elektrischen Anlage zu verbinden. So kann vorgesehen sein, daß in Abhängigkeit von der Energieanforderung durch die elektrische Anlage einzelne Akkumulatoren zu- bzw. abgeschaltet werden. Eine Betriebsoptimierung für die Akkumulatoranordnung und für jeden einzelnen Akkumulator kann erreicht werden.

In einer Weiterbildung wird vorgeschlagen, daß die Schalteinheit mit einer Ladeeinheit verbindbar ist. So kann erreicht werden, daß die Akkumulatoren der Akkumulatoranordnung bedarfsgerecht aufgeladen werden können. So kann beispielsweise vorgesehen sein, daß einzelne, abgeschaltete Akkumulatoren während der Abschaltphase mit dem Ladegerät verbunden sind, um aufgeladen zu werden.

Darüber hinaus wird vorgeschlagen, daß die Ladeeinheit einstellbare Ladekennlinien aufweist. Dies ermöglicht ein individuelles Laden jedes einzelnen Akkumulators in Abhängigkeit von seinen Akkumulatoreigenschaften. So kann beispielsweise für einen Blei-Säure-Akkumulator eine andere Ladekennlinie vorgesehen sein, als für einen Nickel-Cadmium-Akkumulator.

In einer Weiterbildung der vorliegenden Erfindung wird vorgeschlagen, dass die Akkumulatoranordnung einen Rahmen aufweist. Der Rahmen ermöglicht es, die Akkumulatoren der Akkumulatoranordnung als eine Baugruppe zusammenzufassen, die bestimmungsgemäß elektrisch verschaltet ist. Die Anordnung in einem Rahmen ermöglicht darüber hinaus eine leichte Handhabung, insbesondere bei Fahrzeugen, sowie einen erleichterten Austausch.

Weiterhin wird vorgeschlagen, dass der Rahmen eine Handhabe aufweist. Mittels der Handhabe kann erreicht werden, dass eine manuelle Handhabung des Rahmens erleichtert wird.

Es wird ferner vorgeschlagen, dass die Akkumulatoranordnung Schnellverbindungskontakte aufweist. Hierdurch kann erreicht werden, dass beispielsweise bei Traktionsfahrzeugen ein schneller Austausch der Akkumulatoranordnung gegen eine geladene Akkumulatoranordnung erreicht werden kann. Die Verfügbarkeit des Fahrzeugs kann verbessert werden.

In einer Weiterbildung wird vorgeschlagen, dass die Akkumulatoranordnung eine Betriebszustandsanzeige aufweist. So kann beispielsweise vorgesehen sein, dass der Ladungszustand der Akkumulatoranordnung oder einzelner Akkumulatoren angezeigt wird. Es kann aber auch vorgesehen sein, dass die Klemmenspannung oder ein Entlade- und/oder Ladestrom angezeigt wird.

Mit der Erfindung wird ferner ein Verfahren zum Betrieb der erfindungsgemäßen Akkumulatoranordnung vorgeschlagen, wobei wenigstens zwei Akkumulatoren mit deutlich voneinander abweichenden Innenwiderständen zur Energieversorgung einer an die Akkumulatoranordnung anschließbaren elektrischen Anlage parallel betrieben werden. Eine kostengünstige Akkumulatoranordnung kann erreicht werden, bei der eine gute Ausnutzung der elektrischen Kapazität der Akkumulatoren erreicht werden kann.

Weiterhin wird vorgeschlagen, daß die Energieversorgung der elektrischen Anlage im wesentlichen durch den Akkumulator mit dem kleineren Innenwiderstand erfolgt. Hierdurch kann erreicht werden, daß die Spannungsversorgung der elektrischen Anlage eine konstantere Spannung aufweist. Spannungsschwankungen aufgrund von Lastwechseln können reduziert werden.

Ferner wird vorgeschlagen, daß eine Zustandsgröße des Akkumulators ermittelt wird. Als Zustandsgröße kann beispielsweise eine Kenngröße des Akkumulators wie die elektrische Kapazität, die Temperatur, der Elektrolytfüllstand, die elektrische Spannung oder der Ladungszustand des Akkumulators ermittelt werden. Hierzu können an der Akkumulatoranordnung geeignete Sensoren vorhanden sein, mit denen die Zustandsgrößen erfaßbar sind.

Darüber hinaus wird vorgeschlagen, daß die Zustandsgröße gespeichert wird. Auf diese Weise kann die Zustandsgröße abfragbar bereitgehalten werden. Diese Ausgestaltung erweist sich insbesondere bei mobilen Anwendungen als vorteilhaft, bei denen während des bestimmungsgemäßen Betriebs kein Zugang zur Akkumulatoranordnung besteht.

Weiterhin wird vorgeschlagen, daß die Zustandsgröße an eine Zentrale übermittelt wird. Die Übermittlung kann beispielsweise über Funk oder dergleichen erfolgen. Die Zentrale kann auf diese Weise die Zustandsgröße der Akkumulatoranordnung nachhalten und bei Erreichen von vorgebbaren Schwellwerten Maßnahmen einleiten. So kann vorgesehen sein, daß bei Unterschreiten eines bestimmten Ladungszustands der Akkumulatoranordnung eines Fahrzeugs die Akkumulatoranordnung zum nächstmöglichen Zeitpunkt gegen eine geladene Akkumulatoranordnung ausgetauscht wird oder eine Nachladung erfolgen muß.

In einer Weiterbildung wird vorgeschlagen, daß der Akkumulator mit dem kleinen Innenwiderstand durch den Akkumulator mit dem großen Innenwiderstand geladen wird. Hierdurch kann erreicht werden, daß die Kapazität für den Akkumulator mit dem kleinen Innenwiderstand kleiner gehalten werden kann als die Kapazität für den Akkumulator mit dem großen Innenwiderstand. Kosten können eingespart werden.

In einer weiteren Ausgestaltung wird vorgeschlagen, dass die Entladung und/oder Aufladung der Akkumulatoren mittels einer Steuereinheit gesteuert wird. Bei einem Traktionsfahrzeug ist der Akkumulator mit dem großen Innenwiderstand für den Grundlastbetrieb und der Hochleistungsakkumulator mit dem kleinen Innenwiderstand für Spitzenlasten vorgesehen. Dazu verfügt die Steuereinheit über eine Strommesseinheit und sorgt für die Erhaltung einer minimalen Ladung zum Erreichen der nächsten Ladestation. So kann nicht nur die optimale Verfügbarkeit der Akkumulatoranordnung erreicht werden, sondern es kann auch jeder Akkumulator entsprechend seiner Charakteristik optimal geladen werden. Eine hohe Zuverlässigkeit über die vorgesehen Betriebsdauer kann erreicht werden.

Darüber hinaus wird vorgeschlagen, dass die Entladung und/oder Aufladung der Akkumulatoren in Abhängigkeit der Zustandsgröße gesteuert wird. So kann beispielsweise vorgesehen sein, dass bei Unterschreiten eines Spannungsschwellwertes oder eines Ladungsschwellwertes die Ladung der Akkumulatoren der Akkumulatoranordnung veranlasst wird. Die Verfügbarkeit der Akkumulatoranordnung kann weiter verbessert werden.

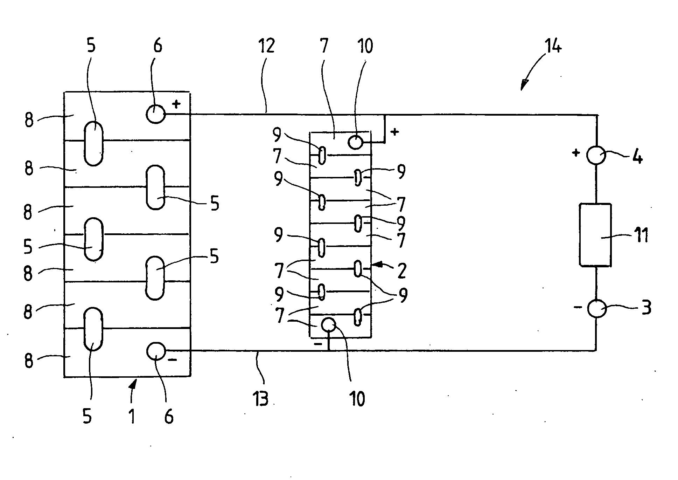

Weitere Vorteile und Merkmale sind der folgenden Beschreibung eines Ausführungsbeispiels zu entnehmen. Im Wesentlichen gleichbleibende Bauteile sind mit den gleichen Bezugszeichen bezeichnet. Die Zeichnung ist eine Schemazeichnung und dient lediglich der Erläuterung des folgenden Ausführungsbeispiels.

Es zeigt die einzige Figur eine erfindungsgemäße Akkumulatoranordnung mit zwei Akkumulatoren im Parallelbetrieb.

Die einzige Figur zeigt einen Blei-Säure-Akkumulator, bei dem als Säure Schwefelsäure verwendet wird. Der Blei-Säure-Akkumulator 1 besteht aus sechs in Serie verschalteten Akkumulatorzellen 8, wobei die Serienschaltung mittels Verbinden der entsprechenden Pole durch elektrisch leitfähige Brücken 5 hergestellt ist. Der Akkumulator 1 weist zwei Klemmen 6 auf, jeweils eine für den positiven und eine für den negativen Pol.

Ferner zeigt die Figur einen Nickel-Cadmium-Akkumulator 2, welcher aus neun Zellen 7 gebildet ist. Die Zellen 7 sind elektrisch seriell miteinander verschaltet durch Brücken 9. Der Akkumulator 2 weist zwei Klemmen 10 auf, jeweils eine für den positiven und eine für den negativen Pol. Über Leitungen 12, 13 sind die positiven Pole 6, 10 der Akkumulatoren 1, 2 mit dem positiven Anschlußpol 4 der Akkumulatoranordnung 14 verbunden. Entsprechend sind die negativen Pole 6, 10 der Akkumulatoren 1, 2 mit dem negativen Anschlußpol der Akkumulatoranordnung 14 verbunden. Die beiden Akkumulatoren 1, 2 befinden sich demnach im Parallelbetrieb.

Konventionsgemäß gilt ein Blei-Säure-Akkumulator als entladen, wenn seine Zellspannung den Wert von 1,83 V erreicht. Bezogen auf den Akkumulator 1 bedeutet dies eine Klemmspannung zwischen den Klemmen 6 von 10,98 V.

Der Akkumulator 2 weist im Betrieb eine Zellspannung von 1,2 V auf, was einer Spannung zwischen den Klemmen 10 von 10,8 V entspricht. Beide Akkumulatoren weisen in der vorliegenden Ausgestaltung demnach etwa die gleiche Spannung auf.

In der vorliegenden Ausgestaltung weist der Akkumulator 1 eine Kapazität von 48 Ah auf. Im Vergleich dazu weist der Akkumulator 2 eine Kapazität von 11 Ah auf.

Der Akkumulator 1 weist ferner einen Innenwiderstand von 9 mΩ auf. Akkumulator 2 weist dagegen einen Innenwiderstand von 0,1 mΩ auf.

Wird nun in der vorliegenden Ausgestaltung durch die elektrische Anlage 11 ein Strom von 100 A entnommen, so würde dies bei alleiniger Versorgung durch den Akkumulator 1 zu einem Spannungsabfall an dem Innenwiderstand dieses Akkumulators 1 unter Anwendung des Ohmschen Gesetzes von etwa 0,9 V führen. Dies entspricht knapp 10% der Klemmspannung zwischen den Klemmen 6 des Akkumulators 1. Da der Akkumulator 1 bei einer Klemmspannung von 10,98 V bereits als entladen betrachtet wird, würde dieser Spannungseinbruch dazu führen, daß schon bei Erreichen einer Spannung von etwa 11,88 V die restliche Kapazität des Akkumulators 1 nicht mehr genutzt werden würde.

Wenn der Strom dagegen durch den Akkumulator 2 bereitgestellt werden würde, würde dies unter Berücksichtigung der oben genannten Zahlen zu einem Spannungsabfall von ca. 0,1 V führen. Dies entspricht etwa einem Spannungseinbruch von 1%. Diese Rechnung zeigt bereits deutlich, daß Akkumulator 2 eine wesentlich höhere Stabilität bezüglich einer Spannungsversorgung der elektrischen Anlage 11 bewirkt.

Die Zusammenschaltung gemäß der Figur führt nun dazu, daß sich der Strom auf die beiden Akkumulatoren 1 und 2 aufteilt. Dabei ergibt sich die Aufteilung unter Berücksichtigung der Innenwiderstände ungefähr zu 1:9, wobei demnach Akkumulator 1 mit etwa 10 A Entladestrom beansprucht wird, wohingegen Akkumulator 2 mit etwa 90 A Entladestrom beansprucht wird. Hierdurch ergibt sich am Innenwiderstand des Akkumulators 1 ein Spannungsabfall von ca. 0,1 V. Ebenso ergibt sich ein Spannungsabfall von ca. 0,1 V am Innenwiderstand des Akkumulators 2. In der vorliegenden Zusammenschaltung wird daher ein Spannungseinbruch von ca. 0,1 V während des vorgesehenen Entladestroms verursacht. Dies entspricht etwa 1 % der Versorgungsspannung. Es ergibt sich daher, daß die Kapazität des Akkumulators 1 nahezu bis zur Grenzspannung von 10,98 V nutzbar ist.

Wird nun die Stromanforderung durch die elektrische Anlage 11 reduziert bzw. eingestellt, so erfolgt die Ladung des Akkumulators 2 durch den Akkumulator 1. Dies ist deshalb von Bedeutung, da der Akkumulator 2 durch die höhere Stromentnahme deutlich stärker entladen wurde als Akkumulator 1. Dazu kommt, daß Akkumulator 2 eine deutlich kleinere Kapazität als der Akkumulator 1 aufweist.

Bei einem Ladestrom aus dem Akkumulator 1 in den Akkumulator 2 von 10 A, was einer bevorzugten Schnelladung des Akkumulators 2 entspricht, findet nun der Spannungseinbruch im wesentlichen durch den höheren Innenwiderstand des Akkumulators 1 statt. Der Spannungsabfall über dem Innenwiderstand des Akkumulators 2 ist in dieser Ausgestaltung vernachlässigbar gering. Somit ist ein Spannungsabfall von wiederum ca. 0,1 V zu veranschlagen. Im Vergleich zur Klemmspannung ist dies jedoch im Bereich von ca. 1 %, so daß im Ergebnis Akkumulator 2 in erfindungsgemäßer Weise durch den Akkumulator 1 aufgeladen wird. Hierdurch kann die Kapazität des Akkumulators 1 erheblich besser genutzt werden als dies ohne die Zusammenschaltung mit dem Akkumulator 2 in der Akkumulatoranordnung 14 möglich wäre. Nach relativ kurzer Zeit ist der Akkumulator 2 wieder geladen und steht für eine neue Hochstromanforderung zur Verfügung.

Das vorbeschriebene Beispiel ist zwar für die Entladung einer Akkumulatoranordnung vorgesehen, sie kann jedoch in dualer Weise auch für das Aufnehmen von elektrischer Ladung bzw. einen Ladevorgang vorgesehen sein.

Um den Innenwiderstand des Akkumulators besonders gering zu gestalten, ist vorgesehen, daß die Elektroden des Akkumulators 2 als Faserstrukturelektroden ausgebildet sind.

Die Zellenzahl des Akkumulators 2 ist so gewählt, daß dessen Nennspannung unterhalb der Nennspannung des Akkumulators 1 liegt.

Die jeweilige Bemessung der Kapazitäten der Akkumulatoren kann den jeweils erforderlichen technischen Anforderungen angepaßt werden.

Das in der Figur dargestellte Ausführungsbeispiel dient lediglich der Erläuterung der Erfindung und ist für diese nicht beschränkend. So können insbesondere die Anzahl der verwendeten Akkumulatoren, die Arten der verwendeten Akkumulatoren, die Zellenanzahl und dergleichen variieren, ohne den Gedanken der Erfindung zu verlassen.

### Bezugszeichenliste

- 1: Akkumulator
- 2: Akkumulator
- 3: negativer Anschlußpol
- 4: positiver Anschlußpol
- 5: Brücke
- 6: Klemme
- 7: Zelle
- 8: Zelle
- 9: Brücke
- 10: Klemme
- 11: elektrische Anlage
- 12: Leitung
- 13: Leitung
- 14: Akkumulatoranordnung

## Patentansprüche

1. Akkumulatoranordnung mit im Parallelbetrieb betreibbaren Akkumulatoren, wobei wenigstens ein Akkumulator einen großen und ein Akkumulator einen kleinen Innenwiderstand aufweisen, wobei der Akkumulator mit dem großen Innenwiderstand gegenüber dem Akkumulator mit dem kleinen Innenwiderstand einen um einen Faktor von mindestens 3, vorzugsweise von mindestens 5, besonders bevorzugt in einem Bereich von 5 bis 25 größeren Innenwiderstand aufweist,
**dadurch gekennzeichnet,**
**dass** die Akkumulatoren eine geeignete Anzahl von Zellen aufweisen, so dass die Akkumulatoren direkt im Parallelbetrieb verschaltbar sind, wobei die Nennspannung des Akkumulators mit dem kleinem Innenwiderstand unterhalb der Nennspannung des Akkumulators mit dem großen Innenwiderstand liegt.

2. Akkumulatoranordnung nach Anspruch 1, **dadurch gekennzeichnet, dass** der Akkumulator mit einem kleinen Innenwiderstand ein Akkumulator mit basischem Elektrolyten,
insbesondere ein Nickel-Metallhydrid- oder Nickel-Cadmium-Akkumulator, ist.

3. Akkumulatoranordnung nach Anspruch 1 oder 2, **dadurch gekennzeichnet, dass** der Akkumulator mit dem kleinen Innenwiderstand ein wartungsfreier Glasvlies-Bleiakkumulator mit prismatischem oder Wickelzellenaufbau ist.

4. Akkumulatoranordnung nach einem der Ansprüche 1 bis 3, **dadurch gekennzeichnet, dass** wenigstens eine Elektrode eines Akkumulators durch eine Faserstrukturelektrode gebildet ist.

5. Akkumulatoranordnung nach einem der Ansprüche 1 bis 4, **dadurch gekennzeichnet, dass** ein Akkumulator ein Lithium-lon-Akkumulator ist.

6. Akkumulatoranordnung nach einem der Ansprüche 1 bis 5, **dadurch gekennzeichnet, dass** eine Zellenzahl des Akkumulators mit basischem Elektrolyten kleiner oder gleich der doppelten Zellenanzahl des Blei-Säure-Akkumulators ist.

7. Akkumulatoranordnung nach einem der Ansprüche 1 bis 6, **dadurch gekennzeichnet, dass** die Kapazität des Akkumulators mit dem kleineren Innenwiderstand 5% bis 70%, vorzugsweise 10% bis 50%, besonders bevorzugt 15% bis 35%, der Kapazität des Akkumulators mit dem größeren Innenwiderstand beträgt.

8. Akkumulatoranordnung nach einem der Ansprüche 1 bis 7, **gekennzeichnet durch** eine Steuereinheit.

9. Akkumulatoranordnung nach einem der Ansprüche 1 bis 8, **gekennzeichnet durch** eine Rechnereinheit.

10. Akkumulatoranordnung nach einem der Ansprüche 1 bis 9, **gekennzeichnet durch** eine steuerbare Schalteinheit.

11. Akkumulatoranordnung nach einem der Ansprüche 1 bis 10 **dadurch gekennzeichnet, dass** die Schalteinheit mit einer Ladeeinheit verbindbar ist.

12. Akkumulatoranordnung nach einem der Ansprüche 1 bis 11, **dadurch gekennzeichnet, dass** die Ladeeinheit einstellbare Ladekennlinien aufweist.

13. Akkumulatoranordnung nach einem der Ansprüche 1 bis 12, **gekennzeichnet durch** einen Rahmen.

14. Akkumulatoranordnung nach Anspruch 13, **dadurch gekennzeichnet, dass** der Rahmen eine Handhabe aufweist.

15. Akkumulatoranordnung nach einem der Ansprüche 1 bis 14, **gekennzeichnet durch** Schnellverbindungskontakte.

16. Akkumulatoranordnung nach einem der Ansprüche 1 bis 15, **gekennzeichnet durch** eine Betriebszustandsanzeige.

17. Verfahren zum Betrieb einer Akkumulatoranordnung, wobei wenigstens ein Akkumulator mit einem großen und ein Akkumulator mit einem kleinen Innenwiderstand parallel betrieben werden, wobei der Akkumulator mit dem großen Innenwiderstand gegenüber dem Akkumulator mit dem kleinen Innenwiderstand einen um einen Faktor von mindestens 3, vorzugsweise von mindestens 5, besonders bevorzugt in einem Bereich von 5 bis 25 größeren Innenwiderstand aufweist,
**dadurch gekennzeichnet,**
**dass** die Akkumulatoren mit einer geeigneten Anzahl von Zellen verwendet werden, so dass die Akkumulatoren direkt im Parallelbetrieb verschaltet werden können, wobei der Akkumulator mit dem kleinen Innenwiderstand durch den Akkumulator mit dem großen Innenwiderstand geladen wird.

18. Verfahren nach Anspruch 17, **dadurch gekennzeichnet, dass** die Energieversorgung der elektrischen Anlage im Wesentlichen durch den Akkumulator mit dem kleinen Innenwiderstand erfolgt.

19. Verfahren nach Anspruch 17 oder 18, **dadurch gekennzeichnet, dass** eine Zustandsgröße des Akkumulators ermittelt wird.

20. Verfahren nach einem der Ansprüche 17 bis 19, **dadurch gekennzeichnet, dass** die Zustandsgröße gespeichert wird.

21. dassVerfahren nach einem der Ansprüche 17 bis 20, **dadurch gekennzeichnet, dass** die Entladung und/oder Aufladung der Akkumulatoren mittels einer Steuereinheit gesteuert wird.

22. Verfahren nach einem der Ansprüche 17 bis 21, **dadurch gekennzeichnet, dass** die Entladung und/oder Aufladung der Akkumulatoren in Abhängigkeit der Zustandsgröße gesteuert wird.

## Claims

1. An accumulator arrangement with accumulators that can be operated in a parallel mode of operation, wherein at least one accumulator has a high internal resistance and one accumulator has a low internal resistance, wherein
the accumulator with the high internal resistance, compared with the accumulator with the low internal resistance, has a higher internal resistance by a factor of at least 3, preferably of at least 5, and is particularly preferred to be in a range from 5 to 25,
**characterised in that** the accumulators have a suitable number of cells so that the accumulators can be directly connected in a parallel mode of operation, wherein
the nominal voltage of the accumulator with the low internal resistance lies below the nominal voltage of the accumulator with the high internal resistance.

2. The accumulator arrangement in accordance with Claim 1, **characterised in that** the accumulator with a low internal resistance is an accumulator with a basic electrolyte, in particular a nickel-metal hydride accumulator, or a nickel-cadmium accumulator.

3. The accumulator arrangement in accordance with Claim 1 or 2, **characterised in that** the accumulator with the low internal resistance is a zero-maintenance glass mat-lead accumulator of prismatic or wound cell construction.

4. The accumulator arrangement in accordance with one of the Claims 1 to 3, **characterised in that** at least one electrode of one accumulator is constituted in terms of a fibre structure electrode.

5. The accumulator arrangement in accordance with one of the Claims 1 to 4, **characterised in that** one accumulator is a lithium-ion accumulator.

6. The accumulator arrangement in accordance with one of the Claims 1 to 5, **characterised in that** the number of cells of the accumulator with a basic electrolyte is less than, or the same as, twice the number of cells of the lead-acid accumulator.

7. The accumulator arrangement in accordance with one of the Claims 1 to 6, **characterised in that** the capacity of the accumulator with the smaller internal resistance amounts to 5% to 70%, preferably 10% to 50%, and is particularly preferred to be 15% to 35% of the capacity of the accumulator with the higher internal resistance.

8. The accumulator arrangement in accordance with one of the Claims 1 to 7, **characterised by** a control unit.

9. The accumulator arrangement in accordance with one of the Claims 1 to 8, **characterised by** a computer unit.

10. The accumulator arrangement in accordance with one of the Claims 1 to 9, **characterised by** a controllable switching unit.

11. The accumulator arrangement in accordance with one of the Claims 1 to 10, **characterised in that** the switching unit can be connected with a charging unit.

12. The accumulator arrangement in accordance with one of the Claims 1 to 11, **characterised in that** the charging unit has adjustable charging characteristics.

13. The accumulator arrangement in accordance with one of the Claims 1 to 12, **characterised by** a frame.

14. The accumulator arrangement in accordance with Claim 13, **characterised in that** the frame has a handle.

15. The accumulator arrangement in accordance with one of the Claims 1 to 14, **characterised by** quick connect contacts.

16. The accumulator arrangement in accordance with one of the Claims 1 to 15, **characterised by** an operating status display.

17. A method for the operation of an accumulator arrangement, wherein at least one accumulator with a high internal resistance and at least one accumulator with a low internal resistance are operated in parallel, wherein the accumulator with the high internal resistance, compared with the accumulator with the low internal resistance, has a higher internal resistance by a factor of at least 3, preferably of at least 5, and is particularly preferred to be in a range from 5 to 25, **characterised in that**
the accumulators are used with a suitable number of cells, so that the accumulators can be directly connected in a parallel mode of operation, wherein the accumulator with the low internal resistance is charged by means of the accumulator with the high internal resistance.

18. The method in accordance with Claim 17, **characterised in that** the energy supply to the electrical equipment takes place essentially by means of the accumulator with the low internal resistance.

19. The method in accordance with Claim 17 or 18, **characterised in that** a status parameter of the accumulator is determined.

20. The method in accordance with one of the Claims 17 to 19, **characterised in that** the status parameter is stored.

21. The method in accordance with one of the Claims 17 to 20, **characterised in that** the discharging and/or charging of the accumulators is controlled by means of a control unit.

22. The method in accordance with one of the Claims 17 to 21, **characterised in that** the discharging and/or charging of the accumulators is controlled as a function of the status parameter.

## Revendications

1. Dispositif d'accumulateur comportant des accumulateurs exploitables en fonctionnement parallèle, dans lequel au moins un accumulateur présente une grande résistance intérieure et un accumulateur présente une petite résistance intérieure, dans lequel l'accumulateur avec la grande résistance intérieure présente par rapport à l'accumulateur avec la petite résistance intérieure une résistance intérieure plus grande d'un facteur d'au moins 3, de préférence d'au moins 5, notamment de préférence dans une plage de 5 à 25,
**caractérisé en ce que**
les accumulateurs présente un nombre approprié de cellules, de sorte que les accumulateurs puissent être interconnectés directement en fonctionnement parallèle, dans lequel la tension nominale de l'accumulateur avec la petite résistance intérieure se situe en dessous de la tension nominale de l'accumulateur avec la grande résistance intérieure.

2. Dispositif d'accumulateur selon la revendication 1, **caractérisé en ce que** l'accumulateur avec une petite résistance intérieure est un accumulateur avec un électrolyte basique, notamment un accumulateur à hydrure de métal/nickel ou un accumulateur cadmium/nickel.

3. Dispositif d'accumulateur selon la revendication 1 ou 2, **caractérisé en ce que** l'accumulateur avec la petite résistance intérieure est un accumulateur au plomb à voile de fibres de verre sans maintenance avec une structure prismatique ou à configuration en cellule enroulée.

4. Dispositif d'accumulateur selon une des revendications 1 à 3, **caractérisé en ce que** au moins une électrode d'un accumulateur est formée par une électrode à structure de fibres.

5. Dispositif d'accumulateur selon une des revendications 1 à 4, **caractérisé en ce que** un accumulateur est un accumulateur à ions de lithium.

6. Dispositif d'accumulateur selon une des revendications 1 à 5, **caractérisé en ce que** un nombre de cellules de l'accumulateur avec électrolyte basique est inférieur ou égal au nombre de cellules double de l'accumulateur à acide de plomb.

7. Dispositif d'accumulateur selon une des revendications 1 à 6, **caractérisé en ce que** la capacité de l'accumulateur avec la petite résistance intérieure correspond à 5% à 70%, de préférence 10% à 50%, de manière encore préférée 15% à 35% de la capacité de l'accumulateur avec la plus grande résistance intérieure.

8. Dispositif d'accumulateur selon une des revendications 1 à 7, **caractérisé par** une unité de commande.

9. Dispositif d'accumulateur selon une des revendications 1 à 8, **caractérisé par** une unité informatique.

10. Dispositif d'accumulateur selon une des revendications 1 à 9, **caractérisé par** une unité de commutation pouvant être commandée.

11. Dispositif d'accumulateur selon une des revendications 1 à 10, **caractérisé en ce que** l'unité de commutation peut être reliée à une unité de charge.

12. Dispositif d'accumulateur selon une des revendications 1 à 11, **caractérisé en ce que** l'unité de charge présente des courbes caractéristiques de charge pouvant être réglées.

13. Dispositif d'accumulateur selon une des revendications 1 à 12, **caractérisé par** une armature.

14. Dispositif d'accumulateur selon la revendication 13, **caractérisé en ce que** l'armature présente une poignée.

15. Dispositif d'accumulateur selon une des revendications 1 à 14, **caractérisé par** des contacts à raccord rapide.

16. Dispositif d'accumulateur selon une des revendications 1 à 15, **caractérisé par** un affichage d'état de fonctionnement.

17. Procédé de fonctionnement d'un dispositif d'accumulateur, dans lequel au moins un accumulateur avec une grande résistance intérieure et un accumulateur avec une petite résistance intérieur sont exploités en parallèle, dans lequel l'accumulateur avec la grande résistance intérieure présente par rapport à l'accumulateur avec la petite résistance intérieure une résistance intérieure plus grande d'un facteur d'au moins 3, de préférence d'au moins 5, de manière encore préférée dans une plage de 5 à 25, **caractérisé en ce que**
les accumulateurs sont utilisés avec un nombre approprié de cellules, de sorte que les accumulateurs puissent être interconnectés directement en fonctionnement parallèle, dans lequel l'accumulateur avec la petite résistance intérieure est chargé par l'accumulateur avec la grande résistance intérieure.

18. Procédé selon la revendication 17, **caractérisé en ce que** l'alimentation électrique de l'installation électrique est effectuée essentiellement par l'accumulateur avec la petite résistance intérieure.

19. Procédé selon la revendication 17 ou 18, **caractérisé en ce que** une grandeur d'état de l'accumulateur est déterminée.

20. Procédé selon une des revendications 17 à 19, **caractérisé en ce que** la grandeur d'état est mémorisée.

21. Procédé selon une des revendications 17 à 20, **caractérisé en ce que** la décharge et/ou la charge des accumulateurs est commandée au moyen d'une unité de commande.

22. Procédé selon une des revendications 17 à 21, **caractérisé en ce que** la décharge et/ou la charge des accumulateurs est commandée en fonction de la grandeur d'état.
